## Europäisches Patentamt

(19) **European Patent Office**

**Office européen des brevets**

(11) Veröffentlichungsnummer: **0 128 310**
**B1**

(12) **EUROPÄISCHE PATENTSCHRIFT**

(45) Veröffentlichungstag der Patentschrift:
23.07.86

(21) Anmeldenummer: **84104605.5**

(22) Anmeldetag: **25.04.84**

(51) Int. Cl.⁴: **B 62 D 55/20**

(54) Gleiskette.

(30) Priorität: **09.05.83 DE 3316972**

(43) Veröffentlichungstag der Anmeldung:
**19.12.84 Patentblatt 84/51**

(45) Bekanntmachung des Hinweises auf die Patenterteilung:
**23.07.86 Patentblatt 86/30**

(84) Benannte Vertragsstaaten:
**AT BE CH FR GB IT LI NL SE**

(56) Entgegenhaltungen:
**US-A-4 035 036**
**US-A-4 203 633**

(73) Patentinhaber: **Krauss- Maffei Aktiengesellschaft,
Krauss- Maffei- Strasse 2, D-8000 München 50 (DE)**

(72) Erfinder: **Seit, Horst, Steinbach 28, D-8086
Moorenweis (DE)**

## Beschreibung

Die Erfindung bezieht sich auf eine Gleiskette gemäß Oberbegriff des Hauptanspruchs.

Bei Gleisketten dieser Art besteht das Problem, daß am Ketteneinlauf die einzelnen Kettenglieder und Endverbinderelemente schlagartig mit dem Antriebsrad und dem Leitrad des Gleisketten-Laufwerks in Eingriff kommen und dadurch Schwingungen erzeugen, durch welche die anschließenden Funktionselemente, insbesondere die Wandungen der Fahrgestellwanne in starke Vibrationen versetzt werden. Zur Lösung dieses auch mit Polygoneffekt umschriebenen Problems sind Einrichtungen bekannt, bei denen die gegeneinander schlagenden Teile mit Dämpfungseinrichtungen versehen sind. Eine derartige Einrichtung ist beispielsweise aus der US-A- 4 203 633 bekannt, bei der die Dämpfung mit Hilfe von Gummipolstern bewirkt wird, die auf der mit dem Antriebs- und Leitrad schlagartig in Berührung kommenden Innenlauffläche der Kettenglieder angeordnet sind.

Diese Einrichtung hat den Nachteil, daß zur Behebung bzw. Minderung des Polygoneffektes gesonderte und verhältnismäßig aufwendige Dämpfungselemente vorgesehen werden müssen, die überdies aufgrund der starken Walkbeanspruchung einem frühzeitigen Verschleiß unterliegen.

Die Aufgabe der Erfindung liegt daher in der Schaffung einer Einrichtung zur Behebung bzw. Minderung des Polygoneffektes, die bei geringerem Herstellungsaufwand eine verbesserte Dämpfungswirkung und eine längere Lebensdauer ergibt.

Diese Aufgabe wird durch die Merkmale aus dem Kennzeichen des Anspruche 1 gelöst, wobei die erfindungsgemäße Wirkung im wesentlichen darauf beruht, daß der Berührungseintritt und der Berührungsaustritt der Gelenkachse auf der zylindrischen Umfangsfläche des Antriebs- bzw. Leitrades nicht gleichzeitig über die gesamte Breite der Umfangsfläche erfolgt, sondern allmählich fortschreitend, wodurch sich die schräg auf die zylindrische Umfangsfläche auflaufende Gelenkachse beim Berührungseintritt zunehmend elastisch krümmt und beim Berührungsaustritt in analoger Weise elastisch wieder gerade zurückstellt.

Die bisher beim Eintritt und Austritt eines Kettengliedes am Antriebs- bzw. Leitrad schlagartig freigesetzte Energie wird nach der Erfindung mit progressiver bzw. degressiver Federungscharakteristik der elastisch sich verbiegenden Gelenkachse in optimaler Weise kompensiert.

Aufgrund der Tatsache, daß bei schräg angeordneten Gelenkachsen auch ein schräger Spalt zwischen den Kettengliedern gegeben ist wird beim Überrollen durch die Laufräder und Stützrollen erreicht, daß die Spalte nicht gleichzeitig über die gesamte Breite überrollt werden, sondern allmählich fortschreitend. In gleichwirkender Weise wie bei einem schrägverzahnten Stirnradgetriebe wird damit eine Schwingungsanregung durch die Spalte vermieden und eine größere Laufruhe erzielt.

Die Erfindung wird nachfolgend anhand von in der Zeichnung dargestellten Ausführungsbeispielen näher beschrieben:

Es zeigen

Fig. 1 Ein Teilstück einer Endverbinderkette mit schräg und parallel angeordneten Gelenkachsen und

Fig. 2 ein Teilstück einer Endverbinderkette mit axialsymmetrisch schräg angeordneten Gelenkachsen.

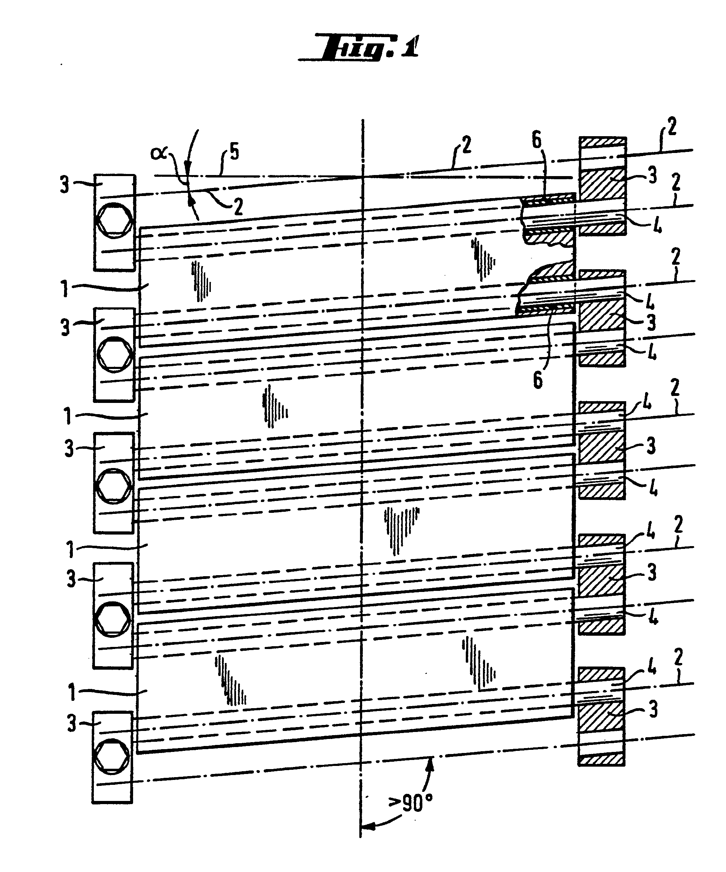

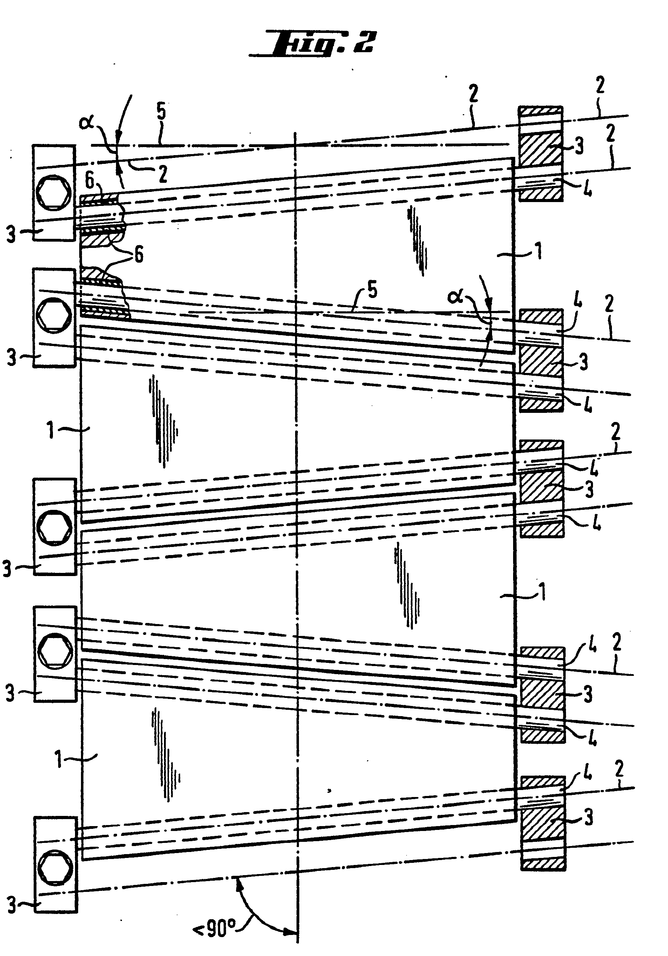

Die Fign. 1 und 2 zeigen jeweils ein aus vier Kettengliedern 1 bestehendes Teilstück einer Endverbinderkette, bei der die einzelnen Kettenglieder 1 über Gelenke miteinander verbunden sind. Die Gelenke stellen bei diesem Gleiskettentyp jeweils ein Doppelgelenk dar, dessen Achsen 2 von in den Kettengliedern 1 in Gummibuchsen 6 gelagerten und mit Endverbindern 3 gekoppelten Verbinderbolzen 4 gebildet werden. Die Achsen 2 jeweils zweier gekoppelter Verbinderbolzen 4 sind in Bezug auf die senkrecht zur Längserstreckung der Gleiskette angeordnete Querachse 5 in einem abweichenden Winkel α angeordnet.

In der Ausführungsform nach Fig. 1 sind die Achsen 2 der Gelenke sämtlicher Kettenglieder parallel zueinander angeordnet.

In der Ausführungsform nach Fig. 2 sind die Achsen 2 der die Kettenglieder 1 verbindenden Gelenke in Bezug auf die Querachse 5 der Gleiskette axialsymmetrisch wechselnd geneigt angeondnet.

In einem anderen, nicht dargestellten Gleiskettentyp der Scharnierkette, weist das Gelenk nur eine Achse auf, die von einem, beide Kettenglieder durchsetzenden Scharnierbolzen gebildet wird.

Im Betrieb wird der auf die zylindrische Auflagefläche des Antriebsrades oder Leitrades zulaufende Verbinderbolzen (oder Scharnierbolzen) aufgrund seiner Schrägstellung zu einer Mantellinie der zylindrischen Auflagefläche zunächst nur mit einem Ende mit der Auflagefläche in Berührung kommen und im weiteren Zulauf, der Schrägstellung entsprechend, zunehmend um die zylindrische Auflagefläche elastisch gebogen, wobei die Beanspruchung innerhalb der Dauerfestigkeitsgrenze liegt. Durch die elastische Verformung wird die ansonsten in harten Schlägen sich umsetzende Energie der in das Antriebs- und das Leitrad einlaufenden Kettenglieder kompensiert.

Die Verformung wird zum Teil auch auf die Gummibuchsen 6 und die zugehörigen Kettenglieder übertragen, wodurch die energiekompensierende Wirkung noch unterstützt wird.

## Patentansprüche

1. Gleiskette für Fahrzeuge, insbesondere für Panzerfahrzeuge, mit Kettenglieder (1), die über Gelenke miteinander verbunden sind, dadurch gekennzeichnet, daß die Achsen (2) der Gelenke in einem von der Querachse (5) der Gleiskette abweichenden Winkel ($\alpha$) angeordnet sind.

2. Gleiskette nach Anspruch 1, dadurch gekennzeichnet, daß die Achsen (2) der die Kettenglieder (1) verbindenden Gelenke parallel zueinander angeordnet sind.

3. Gleiskette nach Anspruch 1, dadurch gekennzeichnet, daß die Achsen (2) der die Kettenglieder (1) verbindenden Gelenke in Bezug auf die Querachse (5) der Gleiskette axialsymmetrisch wechselnd geneigt angeordnet sind.

4. Gleiskette nach den Ansprüchen 1 bis 3, dadurch gekennzeichnet, daß die Gleiskette eine Endverbinderkette ist, deren Gelenke zwischen den Kettengliedern (1) von jeweils ein Doppelgelenk darstellenden, in den Kettengliedern (1) in Gummibuchsen (6) gelagerten und mit Endverbindern (3) gekoppelten Verbinderbolzen (4) gebildet werden.

5. Gleiskette nach den Ansprüchen 1 bis 3, dadurch gekennzeichnet, daß die Gleiskette eine Scharnierkette ist.

6. Gleiskette nach den Ansprüchen 1 bis 5, dadurch gekennzeichnet, daß der Winkel ($\alpha$) so gewählt ist, daß die auf die Achsen (2) der Gelenke wirkende Biegung - beim Umlaufen der Gleiskette um ein Umlenk- bzw. Antriebsrad - kleiner ist als die vom jeweiligen Gelenkachsenmaterial erträgliche Biegewechselfestigkeit.

## Claims

1 A track for tracked vehicles, more especially armored vehicles, comprising track links (1) which are joined together by joints, characterized in that the axes (2) of the joints are arranged at an angle ($\alpha$) departing from the transverse axis (5) of the track.

2 The track as claimed in claim 1 characterized in that the axes (2) of the joints between the track links (1) are arranged parallel to each other.

3 The track as claimed in claim 1 characterized in that the axes (2) of the joints between the track links (1) are arranged so that they are alternately inclined in relation to the transverse axis (5) of the track in axial symmetry.

4 The track as claimed in claims 1 to 3 characterized in that it is an end connector track, whose joints between the track links (1) are constituted respectively by connector pins (4) each representing a double joint, said pins (4) being bearinged in the track links (1) in rubber bushings (6) and being coupled with end connectors (3).

5 The track as claimed in claims 1 to 3 characterized in that it is a hinge joint track.

6 The track as claimed in claims 1 to 5 characterized in that the angle ($\alpha$) is so selected that the bending action which acts on the axes (2) of the joints when the track revolves about a bend or drive wheel is less than the alternating flexural strength of the respective joint axis material.

## Revendications

1. Chenille pour véhicules, en particulier pour véhicules blindés, comportant des éléments ou plaques (1) de chaîne de chenille qui sont reliés les uns aux autres par des articulations, chenille caractérisée en ce que les axes (2) des articulations forment un angle ($\alpha$) avec l'axe transversal (5) de la chaîne de chenille.

2. Chenille selon la revendication 1, caractérisée en ce que les axes (2) des articulations reliant les éléments ou plaques (1) de la chaîne de chenille sont parallèles entre eux.

3. Chenille selon la revendication 1, caractérisée en ce que les axes (2) des articulations reliant les éléments ou plaques (1) de la chaîne de chenille sont alternativement inclinés, avec symétrie axiale, sur l'axe transversal (5) de la chenille.

4. Chenille selon les revendications 1 à 3, caractérisée en ce que la chenille est une chaîne à éléments terminaux de liaison dont les articulations entre les plaques ou éléments (1) de la chaîne constituent à chaque fois une articulation double montée dans des coussinets élastiques (6) des plaques ou éléments (1) de chaîne et formées par des boulons (4) d'assemblage accouplés à l'aide d'éléments terminaux (3) de liaison.

5. Chenille selon les revendications 1 à 3, caractérisée en ce qu'elle est une chenille à charnières.

6. Chenille selon les revendications 1 à 5, caractérisée en ce que l'angle ($\alpha$) est choisi de manière que la flexion s'exerçant sur les axes (2) des articulations, lorsque la chenille passe sur une roue de renvoi ou d'entraînement, est inférieure à la résistance à la fatigue aux flexions alternées caractérisant le matériau de l'axe d'articulation.

Fig. 1

_Fig. 2_